# FASCICULE DE BREVET EUROPEEN

(11) **EP 3 493 914 B1**
(45) Date de publication et mention de la délivrance du brevet: **17.06.2020**
(21) Numéro de dépôt: 17754734.6
(22) Date de dépôt: 20.07.2017
(51) Int. Cl.: B05B 7/00, B05B 7/04, B05B 17/06, B60H 3/02, F24F 6/12

(54) **SYSTEME DE NEBULISATION POUR VEHICULE AUTOMOBILE**
VERDAMPFUNGSSYSTEM FÜR EIN KRAFTFAHRZEUG
VAPORISING SYSTEM FOR A MOTOR VEHICLE

(30) Priorité: 04.08.2016 FR 1601201
(43) Date de publication de la demande: 12.06.2019
(73) Titulaire: Valeo Systemes Thermiques, 78320 Le Mesnil Saint Denis (FR)
(72) Inventeur: ANTOINE, Eric, 78322 Le Mesnil Saint-Denis Cedex (FR); TRUILLET, Franck, 78322 Le Mesnil Saint-Denis Cedex (FR); FEUILLARD, Vincent, 78322 Le Mesnil Saint-Denis Cedex (FR)
(74) Mandataire: Tran, Chi-Hai
(86) Numéro de dépôt international: PCT/FR2017/051998
(87) Numéro de publication internationale: WO 2018/024965

(56) Documents cités:
- WO-A1-2016/009127
- CN-Y- 2 636 138
- FR-A1- 3 004 971
- US-A1- 2008 223 953

## Description

L'invention a pour objet un système de nébulisation pour véhicule automobile.

De façon connue, un système de nébulisation comprend un réservoir d'eau liquide et un dispositif d'émission d'ondes acoustiques configuré de sorte que l'eau issue du réservoir forme un brouillard de gouttelettes d'eau. Des exemples sont divulgués par les documents FR3004971, WO2016009127et US2008223953.

Un tel système de nébulisation permet de rafraichir un flux d'air dans lequel le brouillard d'eau est pulvérisé.

Dans un véhicule automobile, même muni d'un dispositif de ventilation et/ou climatisation, il n'est pas rare que les usagers du véhicule souffrent de la chaleur dans l'habitacle, et en particulier les passagers de la plage arrière, plus éloignée des aérateurs du dispositif de ventilation et/ou climatisation.

De ce fait, il est intéressant de recourir à un système de nébulisation, puisqu'alors le brouillard d'eau rafraichit rapidement l'air de l'habitacle, assurant une sensation de froid immédiat.

Le but de l'invention est de proposer une optimisation d'un tel système de nébulisation.

A cet effet, l'invention a pour objet un système de nébulisation pour véhicule automobile, comprenant un réservoir d'eau liquide et une buse de nébulisation munie d'un élément piézoélectrique d'émission d'ondes acoustiques et d'un concentrateur des ondes acoustiques émises par ledit élément piézoélectrique et configuré de sorte que l'eau issue du réservoir forme un jet d'eau et un brouillard de gouttelettes d'eau en sortie du concentrateur d'ondes acoustiques, ledit brouillard étant destiné à pénétrer dans un habitacle du véhicule automobile, le système comprenant des moyens d'atténuation acoustique, lesdits moyens d'atténuation acoustique comprennent au moins une couche d'une mousse de type absorbant acoustique disposée dans le réservoir.

Ainsi, le système de nébulisation selon la présente invention génère moins de bruits et vibrations, ce qui permet de respecter le confort des occupants du véhicule automobile.

Selon une autre caractéristique de l'invention, les moyens d'atténuation acoustique comprennent au moins une couche d'une mousse de type absorbant acoustique disposée sur un niveau d'eau du réservoir.

Selon une autre caractéristique de l'invention, le système comprend un compartiment de réception du jet d'eau issu de la buse de nébulisation, les moyens d'atténuation acoustique comprenant en outre au moins une couche d'une mousse de type absorbant acoustique dans ledit compartiment de réception.

Selon une autre caractéristique de l'invention, le système comprend en outre un filtre destiné à purifier l'eau issue de la buse de nébulisation.

Selon une autre caractéristique de l'invention, les moyens d'atténuation acoustique comprennent en outre un fil métallique en sortie de la buse de nébulisation disposé de sorte à s'étendre dans le jet d'eau issu de la buse de nébulisation.

Selon une autre caractéristique de l'invention, les moyens d'atténuation acoustique comprennent en outre un évidement de réception du jet d'eau issu de la buse de nébulisation, ledit évidement étant formé dans le réservoir.

Selon une autre caractéristique de l'invention, les moyens d'atténuation acoustique comprennent en outre au moins une nervure d'absorption acoustique formée dans le réservoir.

L'invention a également pour objet un dispositif de ventilation, chauffage et/ou climatisation pour véhicule automobile, comprenant un système de nébulisation tel que décrit précédemment.

D'autres caractéristiques et avantages de l'invention apparaîtront à la lecture de la description qui va suivre. Celle-ci est purement illustrative et doit être lue en regard des dessins annexés sur lesquels :
- la figure 1 illustre une vue schématique en coupe longitudinale d'un système de nébulisation d'un véhicule automobile selon un premier mode de réalisation de la présente invention ;
- les figures 2 et 3 illustrent une vue schématique d'une variante de réalisation de la figure 1 ;
- la figure 4 illustre une vue schématique en coupe longitudinale d'un système de nébulisation d'un véhicule automobile selon un mode de réalisation de la présente invention ;
- la figure 5 illustre une vue en perspective d'une paroi d'un réservoir d'un système de nébulisation selon une première variante de réalisation ; et
- la figure 6 illustre une vue d'une paroi en coupe longitundinale d'un réservoir d'un système de nébulisation selon une deuxième variante de réalisation.

### Nébuliseur

L'invention a pour objet un système de nébulisation d'un véhicule automobile, référencé 1 sur la figure, encore appelé nébuliseur 1.

Le nébuliseur 1 permet de rafraichir un flux d'air F à destination de l'habitacle 2 du véhicule automobile, comme il va être détaillé.

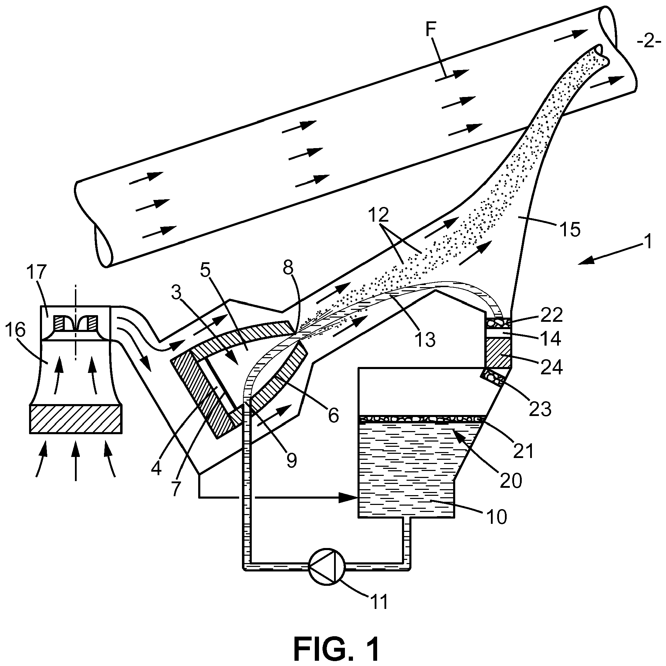

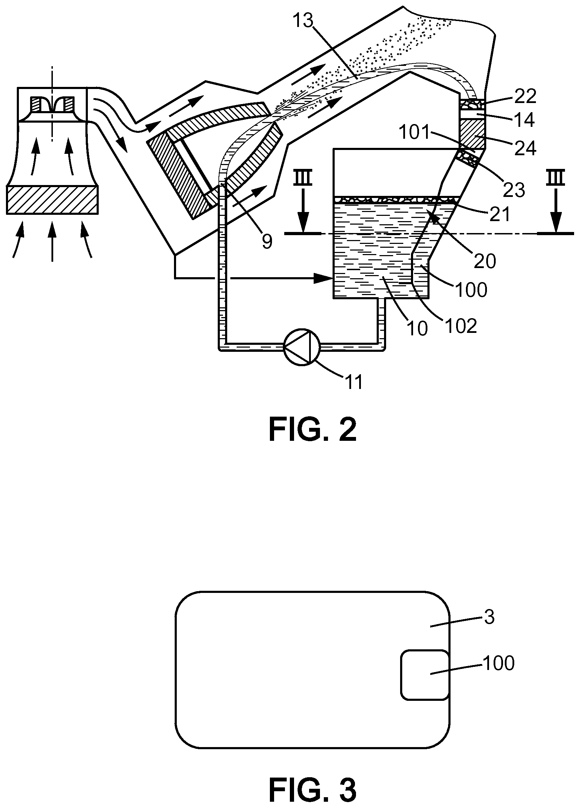

Comme visible sur les figures 1 et 2, le nébuliseur 1 comprend une buse de nébulisation 3 munie d'un dispositif d'émission d'ondes sonores, de préférence ultrasonores, référencé 4.

Le dispositif d'émission d'ondes ultrasonores 4 est par exemple un élément piézoélectrique qui vibre quand il est alimenté électriquement.

L'élément piézoélectrique 4 est par exemple un quartz.

La buse de nébulisation 3 comprend également un concentrateur des ondes sonores générées par l'élément piézoélectrique, autrement appelé concentrateur acoustique et référencé 5.

Le concentrateur acoustique 5, connu de l'homme du métier, comprend une enceinte 6 présentant un rétrécissement progressif depuis une paroi arrière 7 jusqu'à un orifice de sortie 8.

Le concentrateur acoustique 5 comprend également un orifice d'entrée 9 par lequel le concentrateur est alimenté en eau.

L'orifice d'entrée 9 est de préférence central.

L'enceinte 6 est alimentée en eau via l'orifice d'entrée 9 par un circuit de distribution d'eau comprenant un réservoir de stockage d'eau 10 et, avantageusement, une pompe 11.

L'élément piézoélectrique 4 est disposé contre la paroi arrière 7 du concentrateur acoustique 5.

De manière connue, les ondes acoustiques générées par l'élément piézoélectrique 4 sont transmises à l'eau contenue dans l'enceinte 6 par la paroi arrière 7.

La forme convergente de l'enceinte 6 permet de focaliser les ondes acoustiques dans l'orifice de sortie 8, ce qui produit un brouillard de gouttelettes d'eau 12.

Les gouttelettes d'eau présentent un diamètre dépendant de la fréquence de vibration de l'émetteur piézoélectrique.

Par exemple, le diamètre des gouttelettes est inférieur à 10 µm.

Par l'orifice de sortie 8, le brouillard 12 se dirige vers l'habitacle 2 du véhicule automobile par l'intermédiaire d'un conduit 15 d'entrainement du brouillard, tandis qu'un jet d'eau 13 s'écoule dans le réservoir de stockage 10 via un compartiment de récupération d'eau 14.

Comme visible sur les figures 1 et 2, le nébuliseur 1 comprend également une entrée d'air 16 munie d'un ventilateur 17 pour alimenter en air le conduit d'entrainement 15.

Comme visible sur les figures 1 et 2, le système 1 comprend des moyens d'atténuation acoustique 20.

Le nébuliseur 1 va maintenant être décrit plus en détail en relation avec le premier mode de réalisation illustré à la figure 1.

Comme visible sur la figure 1, les moyens d'atténuation acoustique 20 comprennent un premier élément d'atténuation acoustique 21 pourvu d'au moins une couche d'une mousse de type absorbant acoustique disposée dans le réservoir 10, par exemple une mousse à cellules ouvertes.

Sur le mode de réalisation illustré, le premier élément d'atténuation acoustique 21 est disposé sur un niveau d'eau du réservoir.

Par niveau d'eau, on entend niveau de la surface de l'eau contenue dans le réservoir 10.

Le premier élément d'atténuation acoustique 21 permet de réduire le bruit généré par les mouvements de l'eau dans le réservoir 10.

Le premier élément d'atténuation acoustique 21 peut couvrir toute la surface d'eau du réservoir 10, ou la couvrir partiellement.

L'élément 21 peut être discontinu ou au contraire être constitué d'une seule pièce.

Comme visible sur la figure 1, les moyens d'atténuation acoustique 20 comprennent un deuxième élément d'atténuation acoustique 22 pourvu d'au moins une couche d'une mousse de type absorbant, par exemple une mousse à cellules ouvertes, disposé dans le compartiment de réception 14.

Le deuxième élément d'atténuation acoustique 22 permet de réduire la vitesse du jeu d'eau 13 dans le compartiment de réception 14, ce qui permet aussi de réduire l'impact du jet 13 sur le niveau d'eau dans le réservoir 10.

Le nébuliseur 1 comprend également un filtre 24 destiné à épurer l'eau issue de la buse de nébulisation 3.

Le filtre 24 est positionné en aval du deuxième élément d'atténuation acoustique 22 relativement au sens de déplacement du jet d'eau 13.

Comme visible sur la figure 1, les moyens d'atténuation acoustique 20 comprennent un troisième élément d'atténuation acoustique 23 pourvu d'au moins une couche d'une mousse de type absorbant acoustique, par exemple une mousse à cellules ouvertes.

Le troisième élément d'atténuation acoustique 23 est positionné en aval du deuxième élément d'atténuation acoustique 22 relativement au sens de déplacement du jet d'eau 13, et en avant du réservoir 10.

Le troisième élément d'atténuation acoustique 23 permet réduire encore l'impact du jet 13 sur le niveau d'eau dans le réservoir 10.

Selon la variante de la figure 2, le nébuliseur 1 comprend un canal 100 pour relier le compartiment de réception 14 au réservoir 10.

De préférence, une extrémité 101 du canal 100 est disposée au niveau du filtre 24.

De préférence, une autre extrémité du 102 du canal 100 est disposée à proximité du fond du réservoir 10.

L'eau provenant du jet 13 rejoint le réservoir 10 sans heurter la surface supérieure du réservoir.

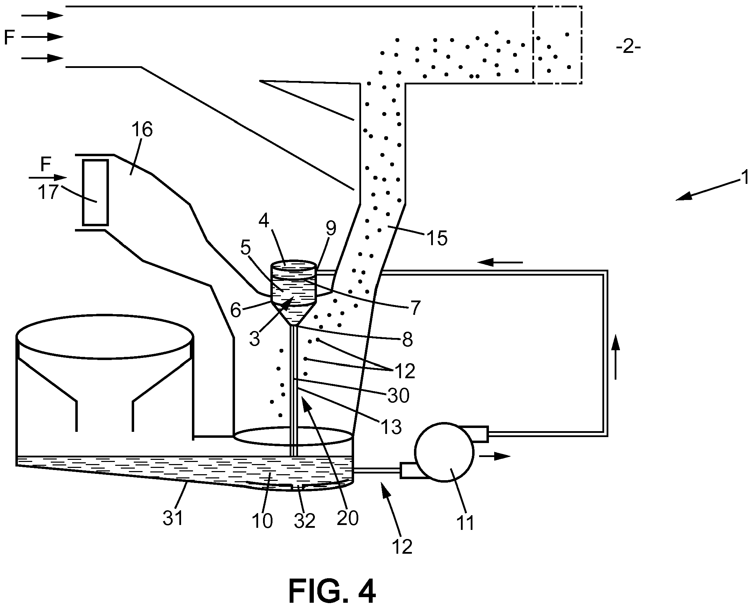

Le nébuliseur 1 va maintenant être décrit plus en détail en relation avec le premier mode de réalisation illustré à la figure 4.

Les éléments communs au premier mode de réalisation portent les mêmes références que sur la figure 1.

Comme visible sur la figure 4, les moyens d'atténuation acoustique 20 comprennent un fil métallique 30 en sortie de la buse de nébulisation 3 disposé de sorte à s'étendre dans le jet d'eau 13 issu de la buse de nébulisation 3.

Comme visible sur la figure 4, le fil métallique s'étend sensiblement verticalement entre la sortie 8 de la buse de nébulisation 3 et un fond 31 du réservoir 10.

Le fil métallique 30 permet de guider l'eau du jet d'eau 13 et d'en réduire l'impact sonore sur le niveau d'eau dans le réservoir 10.

Comme visible sur la figure 2, les moyens d'atténuation acoustique comprennent également un évidement 32 de réception du jet d'eau 13 formé dans le fond 31 du réservoir 10.

Avantageusement, les moyens de traitement acoustiques comprennent au moins une nervure d'absorption acoustique formée dans le réservoir.

De préférence, le réservoir est muni d'une pluralité de ces nervures.

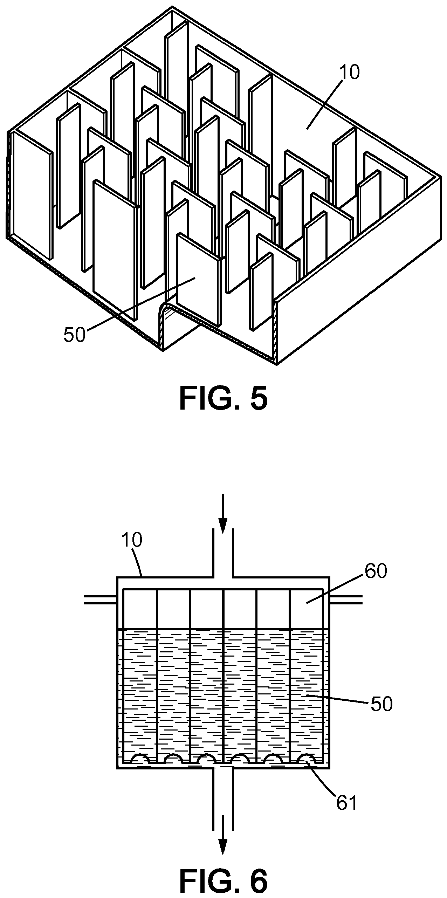

Comme visible sur la figure 5, les nervures, 50, sont disposées en saillie d'une paroi du réservoir 10.

Les nervures sont par exemple disposées perpendiculairement les unes par rapport aux autres, de manière à limiter l'inertie liée au déplacement de l'eau à l'intérieur du réservoir 10.

Le bruit lié au déplacement de la masse d'eau est limité par la multiplicité des nervures, et leur double orientation.

Comme visible sur la figure 6, les nervures 50 forment quadrillage d'une pièce rapportée 60 disposée dans le réservoir 10.

Des communications 61 sont prévues pour la circulation d'eau.

La pièce rapportée peut être une pièce moulée, ou une structure «nid d'abeille», (en aluminium, en résine époxy, en fibre de verre, ...)

De préférence, le réservoir 10 est fait en deux parties pour pouvoir monter et démonter la pièce rapportée 60.

### Avantages

Grâce à la présente invention, les bruits et vibrations émis par le nébuliseur 1 sont drastiquement réduits, ce qui permet de respecter le confort des usagers du véhicule.

Bien entendu, l'invention ne se limite pas aux modes de réalisation décrits.

Par exemple, le nébuliseur 1 peut comprendre un unique élément d'atténuation acoustique 21 ou 22 ou 23, ou une combinaison de deux des trois éléments d'atténuation acoustique 21, 22 et 23.

De plus, les deux modes de réalisation peuvent être combinés.

Par exemple, le nébuliseur de la figure 4 peut être muni de l'élément d'atténuation acoustique 21 et/ou l'élément d'atténuation acoustique 22 et/ou l'élément d'atténuation acoustique 21.

De même, le nébuliseur de la figure 1 peut être muni du fil métallique 30 et/ou de l'évidement 32 du fond 31 du réservoir 10.

## Revendications

1. Système de nébulisation pour véhicule automobile, comprenant un réservoir d'eau liquide (10) et une buse de nébulisation (3) munie d'un élément piézoélectrique (4) d'émission d'ondes acoustiques et d'un concentrateur (5) des ondes acoustiques émises par ledit élément piézoélectrique (4) et configuré de sorte que l'eau issue du réservoir (10) forme un jet d'eau (13) et un brouillard (13) de gouttelettes d'eau en sortie du concentrateur d'ondes acoustiques (5), ledit brouillard (12) étant destiné à pénétrer dans un habitacle (2) du véhicule automobile, le système (1) comprenant des moyens d'atténuation acoustique (20), **caractérisé en ce que**,
lesdits moyens d'atténuation acoustique (20) comprennent au moins une couche d'une mousse de type absorbant acoustique disposée dans le réservoir (10)

2. Système de nébulisation selon la revendication 1, dans lequel les moyens d'atténuation acoustique (20) comprennent au moins une couche d'une mousse de type absorbant acoustique (21) disposée sur un niveau d'eau du réservoir (10).

3. Système de nébulisation selon l'une des revendications précédentes, comprenant un compartiment (14) de réception du jet d'eau (13) issu de la buse de nébulisation (3), les moyens d'atténuation acoustique (20) comprenant en outre au moins une couche d'une mousse de type absorbant acoustique dans ledit compartiment de réception (14).

4. Système de nébulisation selon l'une des revendications précédentes, comprenant un filtre (24) destiné à purifier l'eau issue de la buse de nébulisation (3).

5. Système de nébulisation selon l'une des revendications précédentes, dans lequel les moyens d'atténuation acoustique (20) comprennent en outre un fil métallique (30) en sortie de la buse de nébulisation (3) disposé de sorte à s'étendre dans le jet d'eau (13) issu de la buse de nébulisation (3).

6. Système de nébulisation selon l'une des revendications précédentes, dans lequel les moyens d'atténuation acoustique (20) comprennent en outre un évidement (32) de réception du jet d'eau (13) issu de la buse de nébulisation (3), ledit évidement (32) étant formé dans le réservoir (10).

7. Système de nébulisation selon l'une des revendications précédentes, dans lequel les moyens d'atténuation acoustique (20) comprennent en outre au moins une nervure d'absorption acoustique formée dans le réservoir (10).

8. Dispositif de ventilation, chauffage et/ou climatisation pour véhicule automobile, comprenant un système de nébulisation (1) selon l'une quelconque des revendications précédentes.

## Patentansprüche

1. Vernebelungssystem für ein Kraftfahrzeug, das einen Flüssigwassertank (10) und eine Vernebelungsdüse (3), die mit einem piezoelektrischen Element (4) zum Aussenden von Schallwellen und einem Konzentrator (5) für die von dem piezoelektrischen Element (4) ausgesendeten Schallwellen versehen ist, umfasst und so ausgestaltet ist, dass das aus dem Tank (10) kommende Wasser einen Wasserstrahl (13) und einen Nebel (13) aus Wassertröpfchen am Auslass des Schallwellenkonzentrators (5) bildet, wobei der Nebel (12) dazu bestimmt ist, in einen Innenraum (2) des Kraftfahrzeugs einzudringen, wobei das System (1) Schalldämmeinrichtungen (20) umfasst, **dadurch gekennzeichnet, dass** die Schalldämmeinrichtungen (20) mindestens eine Schicht eines schallschluckenden Schaums umfassen, die im Tank (10) angeordnet ist.

2. Vernebelungssystem nach Anspruch 1, bei dem die Schalldämmeinrichtungen (20) mindestens eine Schicht eines schallschluckenden Schaums (21) umfassen, die auf einem Wasserpegel des Tanks (10) angeordnet ist.

3. Vernebelungssystem nach einem der vorhergehenden Ansprüche, das einen Raum (14) zur Aufnahme des aus der Vernebelungsdüse (3) kommenden Wasserstrahls (13) umfasst, wobei die Schalldämmeinrichtungen (20) ferner mindestens eine Schicht eines schallschluckenden Schaums in dem Aufnahmeraum (14) umfassen.

4. Vernebelungssystem nach einem der vorhergehenden Ansprüche, das einen Filter (24) umfasst, der dazu bestimmt ist, das aus der Vernebelungsdüse (3) kommende Wasser zu reinigen.

5. Vernebelungssystem nach einem der vorhergehenden Ansprüche, bei dem die Schalldämmeinrichtungen (20) ferner einen Metalldraht (30) im Auslass der Vernebelungsdüse (3) umfassen, der so angeordnet ist, dass er sich in dem aus der Vernebelungsdüse (3) kommenden Wasserstrahl (13) erstreckt.

6. Vernebelungssystem nach einem der vorhergehenden Ansprüche, bei dem die Schalldämmeinrichtungen (20) ferner eine Vertiefung (32) zur Aufnahme des aus der Vernebelungsdüse (3) kommenden Wasserstrahls (13) umfassen, wobei die Vertiefung (32) in dem Tank (10) gebildet ist.

7. Vernebelungssystem nach einem der vorhergehenden Ansprüche, bei dem die Schalldämmeinrichtungen (20) ferner mindestens eine Schallschluckrippe umfassen, die in dem Tank (10) gebildet ist.

8. Lüftungs-, Heizungs- und/oder Klimatisierungsvorrichtung für ein Kraftfahrzeug mit einem Vernebelungssystem (1) nach einem der vorhergehenden Ansprüche.

## Claims

1. Nebulizer system for a motor vehicle, comprising a liquid water reservoir (10) and a nebulizer nozzle (3) provided with a piezoelectric element (4) for emitting acoustic waves and a concentrator (5) of the acoustic waves emitted by said piezoelectric element (4), said concentrator (5) being configured such that the water from the reservoir (10) forms a jet of water (13) and a mist (13) of water droplets at the outlet of the acoustic wave concentrator (5), said mist (12) being intended to penetrate into a passenger compartment (2) of the motor vehicle, the system (1) comprising acoustic attenuation means (20), **characterized in that** said acoustic attenuation means (20) comprise at least one layer of an acoustic absorbent type foam disposed in the reservoir (10) .

2. Nebulizer system according to Claim 1, wherein the acoustic attenuation means (20) comprise at least one layer of an acoustic absorbent type foam (21) disposed at a water level of the reservoir (10).

3. Nebulizer system according to either of the preceding claims, comprising a compartment (14) for receiving the jet of water (13) from the nebulizer nozzle (3), the acoustic attenuation means (20) also comprising at least one layer of an acoustic absorbent type foam in said receiving compartment (14).

4. Nebulizer system according to one of the preceding claims, comprising a filter (24) intended to purify the water from the nebulizer nozzle (3).

5. Nebulizer system according to one of the preceding claims, wherein the acoustic attenuation means (20) also comprise a metal wire (30) at the outlet of the nebulizer nozzle (3), said metal wire (30) being disposed so as to extend into the jet of water (13) from the nebulizer nozzle (3).

6. Nebulizer system according to one of the preceding claims, wherein the acoustic attenuation means (20) also comprise a recess (32) for receiving the jet of water (13) from the nebulizer nozzle (3), said recess (32) being formed in the reservoir (10).

7. Nebulizer system according to one of the preceding claims, wherein the acoustic attenuation means (20) also comprise at least one acoustic absorption rib formed in the reservoir (10).

8. Ventilation, heating and/or air conditioning unit for a motor vehicle, comprising a nebulizer system (1) according to any one of the preceding claims.
